# EUROPEAN PATENT APPLICATION

(11) **EP 3 174 254 A1**
(43) Date of publication of application: **31.05.2017**
(21) Application number: 14881839.6
(22) Date of filing: 12.12.2014
(51) Int. Cl.: H04L 12/701

(54) **MESSAGE TRANSCEIVING METHOD AND DEVICE, CHANNEL UNIT AND COMMUNICATION DEVICE**

(30) Priority: 23.07.2014 CN 201410354371
(71) Applicant: ZTE Corporation, Shenzhen, Guangdong 518057 (CN)
(72) Inventor: WANG, Lilin, Shenzhen Guangdong 518057 (CN); YAN, Lin, Shenzhen Guangdong 518057 (CN); WANG, Yangfeng, Shenzhen Guangdong 518057 (CN); FU, Xiaoming, Shenzhen Guangdong 518057 (CN)
(74) Representative: Deambrogi, Edgardo
(86) International application number: PCT/CN2014/093745
(87) International publication number: WO 2015/117502

(57) **Abstract**

The present disclosure discloses a method and device for receiving and sending a message, a channel unit and communication equipment. The method for receiving and sending the message of the present disclosure specifically includes that: a channel unit receives a message sent by equipment born by an equipment network interface; the channel unit judges whether the received message is a message required to be processed by a CPU or not; when a judgment result is that the received message is the message required to be processed by the CPU, the channel unit sends the message to the CPU, receives a response message returned by the CPU, and directly forwards the response message to the equipment; and when the judgment result is that the received message is not the message required to be processed by the CPU, the channel unit generates and sends a corresponding response message to the equipment. According to the method for receiving and sending the message of the present disclosure, message receiving and sending processing may be implemented by fully utilizing a link bandwidth resource, and the problem of low link data bandwidth utilization rate caused by low service processing capability of the CPU is solved.

## Description

### Technical Field

The present disclosure relates to the technical field of communication, and particularly to a method and device for receiving and sending a message, a channel unit and communication equipment.

### Background

In existing communication equipment, message receiving and sending processing is usually implemented in a processing device such as a Central Processing Unit (CPU) or an Advanced Reduced Instruction-Set Computer (RISC) Machine (ARM). Software interrupt driving is required when the CPU or the ARM receives and sends a message. Along with development of a high-speed bus technology, a line bandwidth may usually reach more than 1 G, and a line bandwidth of a 10 Gigabit Attachment Unit Interface (XAUI), a 10 Gigabit Ethernet (10GE) interface, a Serial Rapid Input/Output (SRIO) interface and the like may even reach more than 10G. The CPU or the ARM cannot process such a high-bandwidth service data volume in an interrupt-driven message processing manner, which makes a high link bandwidth idle.

The abovementioned problem is particularly obvious in a large-scale networking application, particularly in an environment where equipment simultaneously has multiple network interfaces, because existence of the multiple network interfaces means duplication of a physical-layer interface bandwidth. Limits of performance of a CPU may cause a low link bandwidth utilization rate, low working efficiency of a networking environment and incapability in networking cost minimization.

### Summary

A main technical problem to be solved by the embodiment of the present disclosure is to provide a method and device for receiving and sending a message, a channel unit and communication equipment, so as to at least solve the problem of low link data bandwidth utilization rate caused by low processing capability of a CPU.

In order to solve the abovementioned technical problem, a method for receiving and sending a message is provided, comprising: receiving, by a channel unit, a message sent by equipment born by an equipment network interface; judging, by the channel unit, whether the received message is a message required to be processed by a Central Processing Unit (CPU) or not; when a judgment result is that the received message is the message required to be processed by the CPU, sending, by the channel unit, the message to the CPU, receiving a response message returned by the CPU, and directly forwarding the response message to the equipment; and when the judgment result is that the received message is not the message required to be processed by the CPU, generating and sending, by the channel unit, a corresponding response message to the equipment.

In an example embodiment, generating and sending, by the channel unit, the corresponding response message to the equipment comprises: analyzing, by the channel unit, the received message, extracting basic information of the received message, and storing the basic information of the received message; and generating, by the channel unit, the response message corresponding to the received message, framing the response message according to the stored basic information, and sending the framed response message to the equipment.

In an example embodiment, the method further comprising: actively generating and sending, by the channel unit, a message to the equipment born by the equipment network interface.

In an example embodiment, the method further comprising: receiving basic information of each piece of equipment born by the equipment network interface from the CPU, wherein actively sending, by the channel unit, the message to the equipment born by the equipment network interface comprises: actively generating, by the channel unit, a message to be sent, extracting basic information of the equipment, framing the message to be sent according to the basic information of the equipment, and sending the framed message to be sent to the equipment born by the equipment network interface.

In an example embodiment, the method further comprising: dividing one elementary time unit into a plurality of slot segments according to a maximum packet sending frequency of messages; dividing a slot segment into a plurality of subinterval segments according to a message type currently to be generated, one subinterval segment corresponding to one message type; and dividing a subinterval segment into a plurality of sub-slot segments according to a maximum number of equipment born by the equipment network interface, one sub-slot segment corresponding to one piece of equipment born by the equipment network interface, wherein actively sending, by the channel unit, the message to the equipment born by the equipment network interface comprises: when a sub-slot segment in the subinterval segment arrives, generating, by the channel unit, a message to be sent of a type corresponding to the subinterval segment, extracting basic information of target equipment corresponding to the sub-slot segment, framing the message to be sent according to the basic information, and sending the framed message to the target equipment.

In an example embodiment, the method further comprising: dividing one elementary time unit into a plurality of slot segments according to a maximum packet sending frequency of messages; and dividing a slot segment into a plurality of subinterval segments according to a message type currently to be generated, one subinterval segment corresponding to one message type, wherein generating, by the channel unit, the response message corresponding to the received message, framing the response message according to the stored basic information and sending the framed response message to the equipment comprises: when a subinterval segment arrives, generating a response message of a type corresponding to the subinterval segment, framing the response message according to the stored basic information, and sending the framed response message to the equipment.

Meanwhile, in order to solve the above problem, a channel unit is provided, comprising: a received message processing component, a Sent message processing component and a message generating component, wherein the received message processing component is configured to receive a message sent by equipment born by an equipment network interface, judge whether the received message is a message required to be processed by a CPU, or not, and when a judgment result is that the received message is the message required to be processed by the CPU, send the message to the CPU; the message generating component is configured to, when a judgment result of the received message processing component is that the received message is not the message required to be processed by the CPU, generate a corresponding response message; and the Sent message processing component is configured to receive a response message returned by the CPU, directly forward the response message to the equipment, and send the response message in the message generating component to the equipment.

In an example embodiment, the message generating component comprises a sent message framing component and a received message caching component; the received message processing component is further configured to analyze the received message, and extract basic information of the received message; the received message caching component is configured to store the extracted basic information of the received message; the sent message framing component is configured to generate the response message corresponding to the received message, and frame the response message according to the basic information stored in the received message caching component; and the Sent message processing component is configured to send the response message framed in the sent message framing component to the equipment.

In an example embodiment, the message generating component is further configured to actively generate a message; and the Sent message processing component is further configured to send the message actively generated by the message generating component to the equipment born by the equipment network interface.

In an example embodiment, the message generating component further comprises: a basic information acquiring component; the basic information acquiring component is configured to receive basic information of each piece of equipment born by the equipment network interface from the CPU; the sent message framing component is configured to actively generate a message to be sent, extract basic information of target equipment from the basic information acquiring component, and frame the message to be sent according to the basic information of the equipment; and the Sent message processing component is configured to send the framed message to be sent to the equipment born by the equipment network interface.

In an example embodiment, the message generating component further comprises: a slot dividing component; the slot dividing component is configured to: divide one elementary time unit into a plurality of slot segments according to a maximum packet sending frequency of messages, divide a slot segment into a plurality of subinterval segments according to a message type currently to be generated, one subinterval segment corresponding to one message type, and divide a subinterval segment into a plurality of sub-slot segments according to a maximum number of equipment born by the equipment network interface, one sub-slot segment corresponding to one piece of equipment born by the equipment network interface; and the sent message framing component is configured to, when a sub-slot segment in the subinterval segment arrives, generate a message to be sent of a type corresponding to the subinterval segment, extract basic information of target equipment corresponding to the sub-slot segment, and frame the message to be sent according to the basic information.

In an example embodiment, the message generating component further comprises: a slot dividing component; the slot dividing component is configured to: divide one elementary time unit into a plurality of slot segments according to a maximum packet sending frequency of messages, and divide a slot segment into a plurality of subinterval segments according to a message type currently to be generated, one subinterval segment corresponding to one message type; and the sent message framing component is configured to, when a subinterval segment arrives, generate a response message of a type corresponding to the subinterval segment, frame the response message according to the stored basic information, and send the framed response message to the equipment.

Meanwhile, in order to solve the above problem, a device for receiving and sending a message is provided, comprising at least two channel units as above mentioned, wherein one channel unit corresponds to one equipment network interface, and each channel unit concurrently receives message transmitted by each equipment network interface; the device for receiving and sending the message further comprises a converging component; and the converging component is configured to converge and send messages sent to a CPU, by each channel unit to the CPU, and send a response message returned by the CPU to the corresponding channel unit.

Meanwhile, in order to solve the above problem, communication equipment is provided, comprising a CPU, at least two equipment network interfaces and the device for receiving and sending the message above mentioned.

The embodiment of the present disclosure has the following beneficial effects.

The embodiment of the present disclosure provides the method and device for receiving and sending a message, the channel unit and the communication equipment, and message receiving and sending processing may be implemented by fully utilizing a link bandwidth resource, so that the problem of low link data bandwidth utilization rate caused by low processing capability of the CPU is solved. The method for receiving and sending of the message in the embodiment of the present disclosure specifically includes that: the channel unit receives the message sent by the equipment born by the equipment network interface; the channel unit judges whether the received message is a message required to be processed by the CPU or not; when a judgment result is that the received message is the message required to be processed by the CPU, the channel unit sends the message to the CPU, receives the response message returned by the CPU, and directly forwards the response message to the equipment; and when the judgment result is that the received message is not the message required to be processed by the CPU, the channel unit generates and sends the corresponding response message to the equipment. In the present disclosure, the channel unit and the CPU cooperate for message receiving and sending processing, original message receiving and sending processing in the CPU is transferred into the channel unit for processing, and the CPU only processes a small number of communication messages, so that the problem of low link data bandwidth utilization rate caused by low processing capability of the CPU is solved; dependence on performance of the CPU is broken, a capability of receiving and sending the message is determined completely by a link bandwidth of a communication system, and a bandwidth resource of a network is maximally utilized; and compared with a related art, the method for receiving and sending the message in the embodiment of the present disclosure improves link utilization efficiency.

### Brief Description of the Drawings

Fig. 1 is a flowchart of a method for receiving and sending the message according to embodiment 1 of the present disclosure;
Fig. 2 is a flowchart of slot division according to embodiment 1 of the present disclosure;

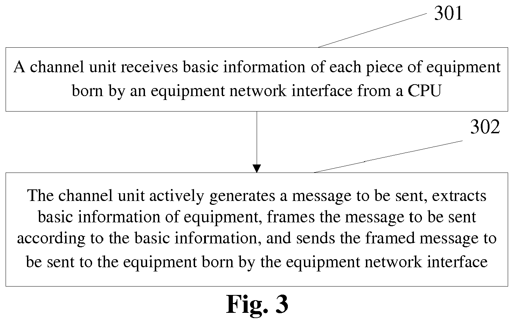

Fig. 3 is a flowchart of another method for receiving and sending the message according to embodiment 1 of the present disclosure;
Fig. 4 is a schematic diagram of slot division according to embodiment 1 of the present disclosure;
Fig. 5 is a structure diagram of a first channel unit according to embodiment 2 of the present disclosure;
Fig. 6 is a structure diagram of a second channel unit according to embodiment 2 of the present disclosure;
Fig. 7 is a structure diagram of a third channel unit according to embodiment 2 of the present disclosure;
Fig. 8 is a structure diagram of a fourth channel unit according to embodiment 2 of the present disclosure;
Fig. 9 is a structure diagram of a fifth channel unit according to embodiment 2 of the present disclosure;
Fig. 10 is a structure diagram of a device for receiving and sending the message according to embodiment 3 of the present disclosure; and
Fig. 11 is a structure diagram of communication equipment according to embodiment 3 of the present disclosure.

### Detailed Description of the Embodiments

The present disclosure will be further described below with reference to specific implementation modes and the drawings in detail.

### Embodiment 1

Considering the problem of low link data bandwidth utilization rate caused by low service data processing capability brought by architectural limits of a CPU in a related technology, the embodiment discloses a method for receiving and sending a message. A unit is arranged to execute message receiving and sending processing of a conventional CPU, so that the problem of low link data bandwidth utilization rate caused by low performance of the CPU is solved.

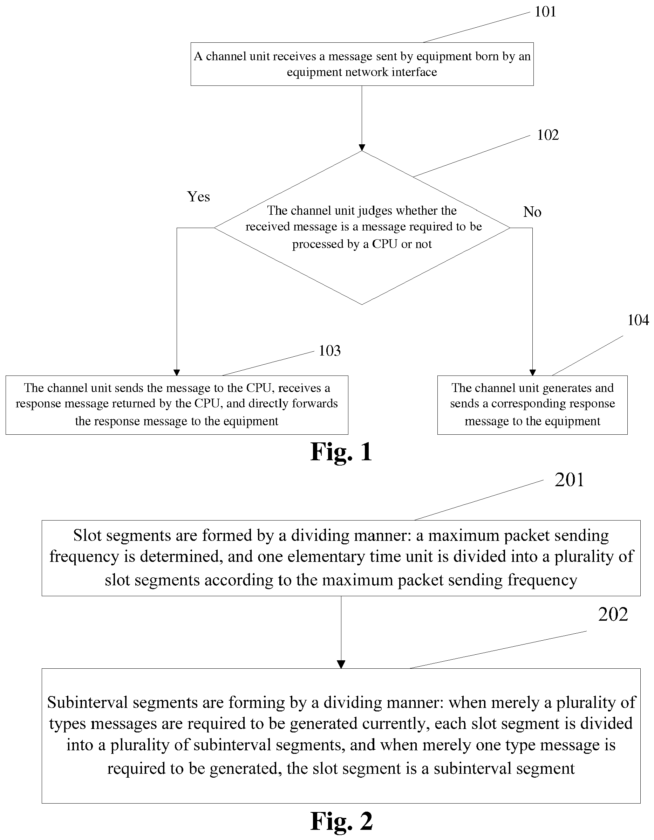

As shown in Fig. 1, an execution main body of the method for receiving and sending the message of the embodiment is a channel unit, and the method includes the following steps.

Step 101: a channel unit receives a message sent by equipment born by an equipment network interface.

Communication equipment may include multiple equipment network interfaces, each equipment network interface may bear multiple pieces of equipment, and the channel unit may receive messages of the equipment under one equipment network interface.

The channel unit in the embodiment may be implemented in a programmable logical module.

Step 102: the channel unit judges whether the received message is a message required to be processed by a CPU or not, Step 103 is executed when a judgment result is that the received message is the message required to be processed by the CPU, and when the judgment result is that the received message is not the message required to be processed by the CPU, Step 104 is executed.

In the embodiment, the channel unit has a processing function of receiving and sending a message. When the received message (called a received message for short hereinafter) is not required to be processed by the CPU of equipment, it is merely required to be processed in the channel unit. When the received message is required to be processed by the CPU, the channel unit forwards the message to the CPU for processing. By such a mechanism, a problem caused by low performance of the CPU may be solved.

Generally, the message required to be processed by the CPU includes: a message for establishing a link and the like, and other service messages may all be processed in the channel unit.

Step 103: the channel unit sends the message to the CPU, receives a response message returned by the CPU, and directly forwards the response message to the equipment.

The CPU may return a corresponding message data package (framed message) after receiving the message, and the channel unit is only required to forward the corresponding message data package to the corresponding equipment under the network interface, and is not required to perform any processing.

Step 104: the channel unit generates and sends a corresponding response message to the equipment.

Specifically, the channel unit may generate the response message according to a preset slot rule and then frame and send the response message to the equipment under the network interface.

According to the method of the embodiment, the channel unit and the CPU cooperate for message receiving and sending processing, original message receiving and sending processing in the CPU is transferred into the channel unit for processing, and the CPU only processes a small number of communication messages, so that the problem of low link data bandwidth utilization rate caused by low processing capability of the CPU is solved; dependence on performance of the CPU is broken, a capability of receiving and sending the message is determined completely by a link bandwidth of a communication system, and a bandwidth resource of a network is maximally utilized; and compared with the related art, the method for receiving and sending the message of the embodiment of the present disclosure improves link utilization efficiency.

Step 104 of the method of the embodiment may specifically include that:
the channel unit analyzes the received message, extracts basic information of the message, and stores the basic information of the message; and
the channel unit generates the response message corresponding to the received message, frames the response message according to the stored basic information, and sends the framed response message to the equipment.

In the embodiment, the basic information is identification information, including: a Media Access Control (MAC) address, Internet Protocol (IP) address, message identifier and the like of the equipment.

The received message may usually include the basic information of the sending equipment, such as the MAC address, and in the method of the embodiment, the basic information of the sending equipment may be extracted from the received message, and then the generated response message is framed according to the basic information.

Under the condition that the channel unit performs message receiving and sending processing, in order to achieve higher accuracy of a packet sending interval as well as a larger packet sending amount, in the method of the embodiment, slot division may also be performed to provide a proper regular sending manner for sending the message.

In an example embodiment, the method of the embodiment may include a slot division process:
one elementary time unit is divided into a plurality of slot segments according to a maximum packet sending frequency of messages;
a slot segment is divided into a plurality of subinterval segments according to a message type currently to be generated, one subinterval segment corresponding to one message type; and
after division based on the abovementioned division manner, a process of sending the response message in the method of the embodiment includes that:
   when a subinterval segment arrives, a response message of a type corresponding to the subinterval segment is generated, the response message is framed according to the stored basic information, and the framed response message is sent to the equipment until communication of all response messages of the type with the equipment under the equipment network interface is implemented.

A specific time sequence division manner includes:
Step 201: the slot segment is divided: the maximum packet sending frequency is determined, and one elementary time unit (such as 1 second and 10 milliseconds) is divided into a plurality of slot segments according to the maximum packet sending frequency; and
Step 202: the subinterval segment is divided: when merely a plurality types of messages are required to be generated currently, each slot segment is divided into a plurality of subinterval segments, and when merely one type message is required to be generated, the slot segment is a subinterval segment.

The type of Messages of all the equipment under the network interface are generated in each subinterval segment, and communication of the messages of the type between all the equipment and the channel unit is implemented.

A processing process of the channel unit after receiving the message is introduced above, and the method of the embodiment may also be adapted to active message sending of the channel unit. Specifically, on the basis of the abovementioned method, the method of the embodiment may further include that: the channel unit actively generates and sends a message to the equipment born by the equipment network interface.

An active message sending process in the embodiment will be introduced below.

Step 301: the channel unit receives basic information of each piece of equipment born by the equipment network interface from the CPU.

In the embodiment, the CPU may implement communication and link establishment with each piece of networked equipment through a network, and after successful link establishment, CPUs of the equipment may acquire the basic information such as the MAC addresses, IP addresses and message identifiers of each piece of networked equipment.

Specifically, an acquisition process may be implemented as follows:
a CPU of master equipment implements link establishment with all the networked equipment through Address Resolution Protocol (ARP) messages and signaling messages, and stores a CPU message to be returned into a CPU message cache in the channel unit;
the CPU of the master equipment acquires the number of sub-equipment in the current network and basic information of the sub-equipment (including all the equipment born by each network interface) through a link establishment process; and
the CPU of the master equipment extracts the basic information of the sub-equipment.
step 302: the channel unit actively generates a message to be sent, extracts the basic information of the equipment, frames the message to be sent according to the basic information, and sends the framed message to be sent to the equipment born by the equipment network interface.

According to the method of the present disclosure, configuration information tables may be established for each piece of equipment under the network interface according to the acquired basic information, and the tables are numbered, the maximum born equipment number corresponds to the maximum table number, and the table of each number stores the basic message information: the MAC addresses, the IP addresses, the message identifiers and the like, of the corresponding equipment.

In a process of extracting the basic information, the basic information of the equipment may be extracted by virtue of the numbers. After the basic information is extracted, the message to be sent may be packetized according to the basic information, and the packetized message is sent to the equipment born by the network interface.

In order to achieve higher accuracy of the packet sending interval as well as a larger packet sending amount, in the method of the embodiment, slot division may also be performed, and then messages are sent according to a division-based regular sending manner. At this moment, the method of the embodiment may further include that:
one elementary time unit is divided into a plurality of slot segments according to a maximum packet sending frequency of messages;
a slot segment is divided into a plurality of subinterval segments according to a message type currently to be generated, wherein one subinterval segment corresponds to one message type;
a subinterval segment is divided into a plurality of sub-slot segments according to a maximum number of equipment born by the equipment network interface, wherein one sub-slot segment corresponds to one piece of equipment born by the equipment network interface; and
the step that the channel unit actively sends the message to the equipment born by the equipment network interface includes that:
   when a sub-slot segment in the subinterval segment arrives, the channel unit generates a message to be sent of a type corresponding to the subinterval segment, extracts the basic information of target equipment corresponding to the sub-slot segment, frames the message to be sent according to the basic information, and sends the framed message to the target equipment.

According to the method of the embodiment, all communication of the type may be implemented within a subinterval segment, and then messages of the next type are sent until communication of all the messages is implemented.

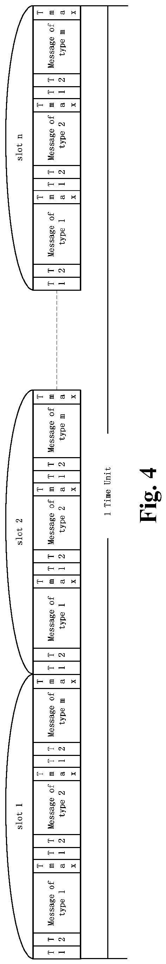

In the embodiment, a slot division manner in the active message sending process includes:
401) the slot segment is divided: the maximum packet sending frequency is determined, and one elementary time unit (such as 1 second and 10 milliseconds) is divided into a plurality of slot segments according to the maximum packet sending frequency, such as slot segments and numbers shown in Fig. 4;
402) the subinterval segment is divided: when merely a plurality of types messages are required to be generated currently, one slot segment is divided into a plurality of subinterval segments, and when merely one type is required to be generated, the slot segment is a subinterval segment, such as message type segments and numbers shown in Fig. 4; and
403) the sub-slot segment is divided: the sub-slot segment is divided in each subinterval segment according to a current maximum equipment number of the system, wherein the number of the sub-slot segments corresponds to the maximum equipment number, and the number of each sub-slot corresponds to the equipment configuration information table, such as T segments and numbers shown in Fig. 4.

Packet sending equipment and a packet sending amount are matched: the sub-slots are divided according to the maximum packet sending frequency and the maximum equipment number in the embodiment. For equipment with a low packet sending rate and frequency, the sub-slots may be shielded; and for equipment without a packet sending requirement, the sub-slots and numbers of the sub-slot may be shielded. Therefore, effective sub-slots and effective sub-slot numbers are generated.

In an example embodiment, the same slot division manner may be adopted to send messages in the active message sending process and a passive response message sending process in the embodiment. For example, a time mechanism generated by the division manner including 401-403 is adopted to actively send the message or passively send the response message.

The method for receiving and sending the message of the embodiment will be described through 10GE and SRIO equipment network interfaces.
1: when interfaces between equipment of a system are 10GE interfaces: receiving and sending bandwidths of a single channel link are 10Gbps respectively, i.e. 1.25GBps. When a maximum number of equipment born by each equipment network interface of the system is 1,000, that is, a max value in Fig. 4 is 1,000, there are totally two types of messages required to be sent, and message packet lengths are 64Byte and 1,534Byte respectively, that is, an m value in Fig. 4 is 2. Considering a requirement of a message interval of 12Byte, a highest packet sending frequency in one unit time of 1 second is 1.25G/1,000*(1,534+12+64+12)=770, that is, an n value in Fig. 4 is 770. Therefore, the unit time of 1 second may be divided into 770 slots (1-770), each slot may be divided into 2 subintervals (1-2), and each subinterval may be divided into 1,000 sub-slots (1-1,000). That is, communication of 64Byte messages of the 1,000 pieces of equipment is implemented from the sub-slot 1 to sub-slot 1,000 of the subinterval 1 of the slot 1 respectively, and communication of 1,536Byte messages of the 1,000 pieces of equipment is implemented from the sub-slot 1 to sub-slot 1,000 of the subinterval 2 of the slot 2 until messages of all the sub-slots of the slot 770 are sent. Meanwhile, the sub-slots may be enabled according to each piece of practical equipment and practical frequencies of the equipment.
2: when the interfaces between the equipment of the system are 2X3.125G SRIO interfaces: the receiving and sending bandwidths of a single channel link are 5Gbps respectively, i.e. 625MBps. When the maximum number of the equipment born by each equipment network interface of the system is 1,000, that is, the max value in Fig. 4 is 1,000, there is totally one type of messages required to be sent, that is, the m value in Fig. 4 is 1. A message packet length is 256Byte. Considering the requirement of the message interval of 12Byte, the highest packet sending frequency in the unit time of 1 second is 625M/1,000*(256+12)=2,332, that is, the n value in Fig. 4 is 2,332. Therefore, the unit time of 1 second may be divided into 2,332 slots (1-2,332), each slot is a subinterval, and each subinterval may be divided into 1,000 sub-slots (1-1,000). That is, communication of 256Byte messages of the 1,000 pieces of equipment is implemented from the sub-slot 1 to sub-slot 1,000 of the subinterval 1 of the slot 1 respectively until messages of all the sub-slots of the slot 2,332 are sent. Meanwhile, the sub-slots may be enabled according to each piece of practical equipment and the practical frequencies of the equipment.

According to the method of the embodiment, under the abovementioned condition, in each sub-slot segment, the basic information of all the messages of the number of the sub-slot is read from the equipment configuration information tables according to the number, the messages are framed according to the basic information of the messages, and the messages are sent in the sub-slot of the subinterval segment, corresponding to the messages, of each elementary time unit.

Compared with a CPU-based message receiving and sending manner, the method for receiving and sending the message of the embodiment has the advantages that a high-frequency accurate regular manner of a programmable logic ensures higher packet sending interval accuracy and larger packet sending amount. The problem of low link data bandwidth utilization rate caused by poor processing capability of the CPU is solved, so that dependence on system performance of the CPU is broken, and the message receiving and sending capability is determined completely by the link bandwidth of the system.

### Embodiment 2

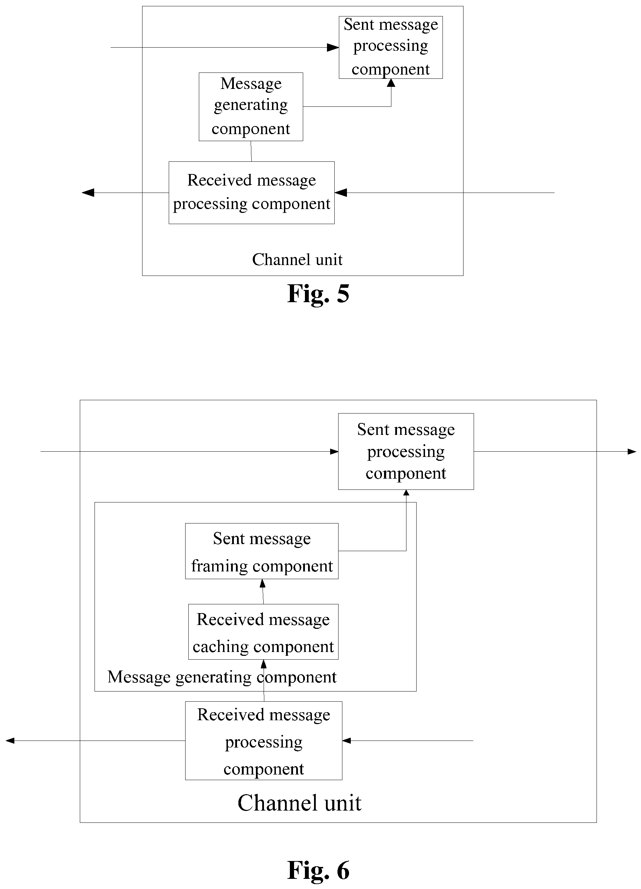

As shown in Fig. 5, the embodiment provides a channel unit, which includes: a received message processing component, a Sent message processing component and a message generating component, wherein
the received message processing component is configured to receive a message sent by equipment born by an equipment network interface, judge whether the received message is a message required to be processed by a CPU or not, and when a judgment result is that the received message is the message required to be processed by the CPU, send the message to the CPU;
the message generating component is configured to, when a judgment result of the received message processing component is that the received message is the message required to be processed by the CPU, generate a corresponding response message; and
the Sent message processing component is configured to receive a response message returned by the CPU, directly forward the response message to the equipment, and send the response message in the message generating component to the equipment.

The channel unit of the embodiment may cooperate with the CPU to implement message receiving and sending processing, so that the problem of low link bandwidth utilization rate caused by low performance of a CPU is solved.

As shown in Fig. 6, the message generating component in the embodiment includes a sent message framing component and a received message caching component;
the received message processing component is further configured to analyze the received message, and extract basic information of the message;
the received message caching component is configured to store the extracted basic information of the received message;
the sent message framing component is configured to generate the response message corresponding to the received message, and frame the response message according to the basic information stored in the received message caching component; and
the Sent message processing component is configured to send the response message framed in the sent message framing component to the equipment.

On the basis of the abovementioned channel unit, the message generating component in the embodiment is further configured to actively generate a message; and the Sent message processing component is further configured to send the message actively generated by the message generating component to the equipment born by the equipment network interface.

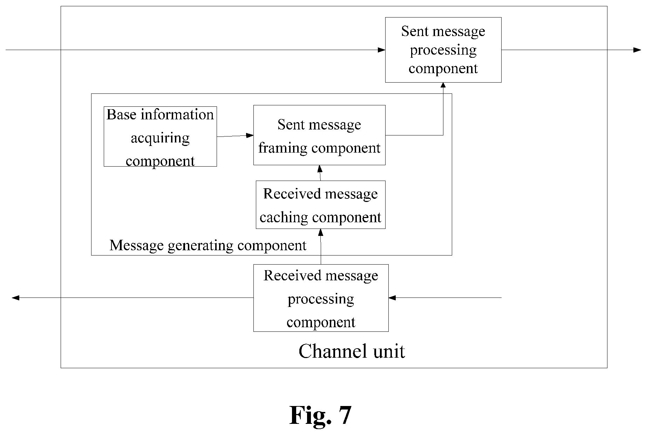

On the basis of the abovementioned channel unit, as shown in Fig. 7, the message generating component in the embodiment further includes: a basic information acquiring component;
the basic information acquiring component is configured to receive basic information of each piece of equipment born by the equipment network interface from the CPU;
the sent message framing component is configured to actively generate a message to be sent, extract the basic information of target equipment from the basic information acquiring component, and frame the message to be sent according to the basic information; and
the Sent message processing component is configured to send the framed message to be sent to the equipment born by the equipment network interface.

The basic information acquiring component in the embodiment may be an equipment configuration information table component, configured to, after the basic information is acquired, generate equipment configuration information table of each piece of equipment born by the network interface according to the basic information.

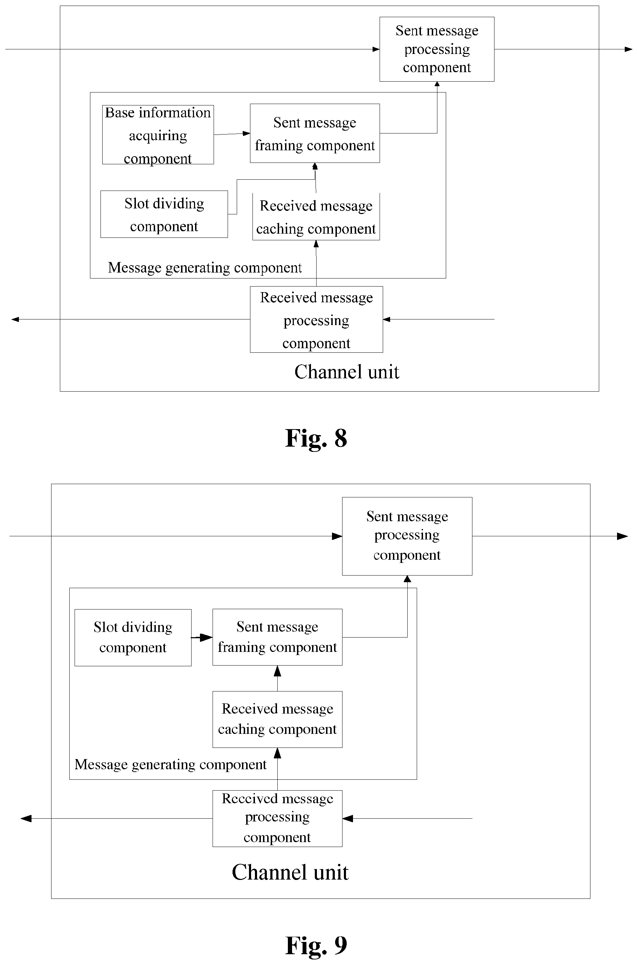

In an example embodiment, as shown in Fig. 8, the message generating component in the embodiment further includes: a slot dividing component; the slot dividing component is configured to:
divide one elementary time unit into a plurality of slot segments according to a maximum packet sending frequency of messages,
divide a slot segment into a plurality of subinterval segments according to a message type currently to be generated, wherein one subinterval segment corresponds to one message type, and
divide a subinterval segment into a plurality of sub-slot segments according to a maximum number of equipment born by the equipment network interface, wherein one sub-slot segment corresponds to one piece of equipment born by the equipment network interface; and
the sent message framing component is configured to, when a sub-slot segment in a subinterval segment arrives, generate a message to be sent of a type corresponding to the subinterval segment, extract the basic information of target equipment corresponding to the sub-slot segment, and frame the message to be sent according to the basic information.

In an example embodiment, as shown in Fig. 9, on the basis of the channel unit shown in Fig. 6, the message generating component in the embodiment further includes: a slot dividing component; the slot dividing component is configured to:
divide one elementary time unit into a plurality of slot segments according to a maximum packet sending frequency of messages, and
divide a slot segment into a plurality of subinterval segments according to a message type currently to be generated, wherein one subinterval segment corresponds to one message type; and
the sent message framing component is configured to, when a subinterval segment arrives, generate a response message of a type corresponding to the subinterval segment, frame the response message according to the stored basic information, and send the framed response message to the equipment.
in an example embodiment, in order to better send the message, a CPU message cache unit may also be arranged in the channel unit, and is configured to cache the response message sent by the CPU.

According to the channel unit of the embodiment, a high-frequency accurate regular manner ensures higher packet sending interval accuracy and a larger packet sending amount. The problem of low link data bandwidth utilization rate caused by poor processing capability of the CPU is solved, so that dependence on system performance of the CPU is broken, and a message receiving and sending capability is determined completely by a link bandwidth of a system.

### Embodiment 3

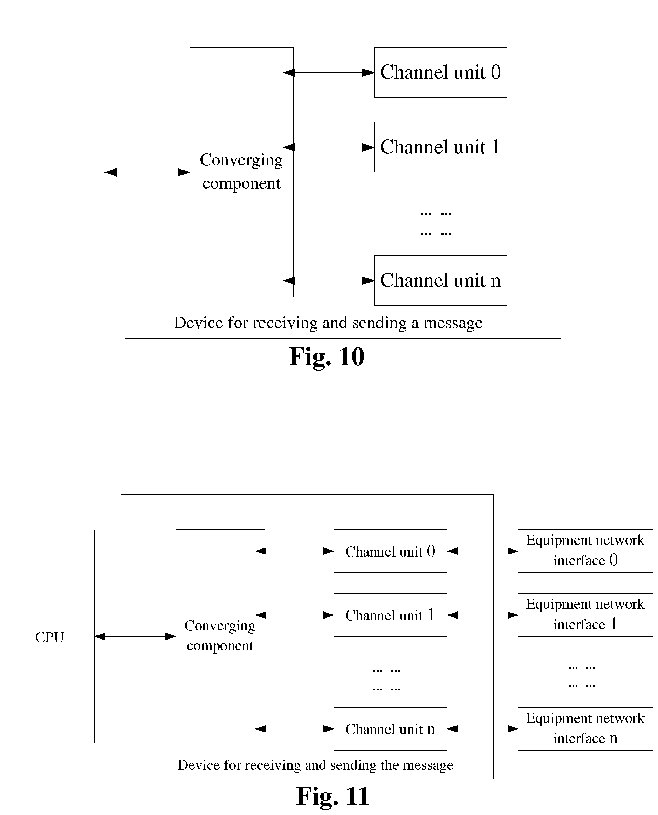

As shown in Fig. 10, the embodiment provides a device for receiving and sending a message, which includes at least two channel units mentioned in embodiment 2, wherein one channel unit corresponds to one equipment network interface, and each channel unit concurrently receives messages transmitted by each equipment network interface;
the message receiving and sending device further includes a converging component; and the converging component is configured to converge and send messages sent to a CPU by each channel unit to the CPU, and send a response message returned by the CPU to the corresponding channel units.

The device for receiving and sending a message in the embodiment may be implemented by a programmable logical module.

As shown in Fig. 11, the embodiment also provides communication equipment, which includes a CPU, at least two equipment network interfaces and the device for receiving and sending the message shown in Fig. 10.

The communication equipment of the embodiment implements message receiving and sending processing through cooperation of the CPU and the device for receiving and sending the message (such as a programmable logic) by fully utilizing a concurrent processing manner of the device for receiving and sending the message (such as the programmable logic) and fully utilizing a bandwidth resource of a link, avoids link idleness caused by low system processing capability of the CPU and further improves link utilization efficiency.

The above content is the further detailed description, made with reference to specific implementation modes, about the present disclosure and is not intended to limit specific implementation of the present disclosure. Those skilled in the art may also made a plurality of simple deductions or replacements without departing from the concept of the present disclosure, which shall fall within the scope of protection of the present disclosure.

### Industrial Applicability

As mentioned above, the method and device for receiving and sending the message, channel unit and communication equipment provided by the embodiment of the present disclosure have the following beneficial effects: the channel unit and the CPU cooperate for message receiving and sending processing, original message receiving and sending processing in the CPU is transferred into the channel unit for processing, and the CPU only processes a small number of communication messages, so that the problem of low link data bandwidth utilization rate caused by low processing capability of the CPU is solved; dependence on performance of the CPU is broken, a capability of receiving and sending a message is determined completely by a link bandwidth of a communication system, and a bandwidth resource of a network is maximally utilized; and compared with the related art, the method for receiving and sending the message of the embodiment of the present disclosure improves link utilization efficiency.

## Claims

1. A method for receiving and sending a message, comprising:
receiving, by a channel unit, a message sent by equipment born by an equipment network interface;
judging, by the channel unit, whether the received message is a message required to be processed by a Central Processing Unit, CPU, or not;
when a judgment result is that the received message is the message required to be processed by the CPU, sending, by the channel unit, the message to the CPU, receiving a response message returned by the CPU, and directly forwarding the response message to the equipment; and
when the judgment result is that the received message is not the message required to be processed by the CPU, generating and sending, by the channel unit, a corresponding response message to the equipment.

2. The method as claimed in claim 1, wherein generating and sending, by the channel unit, the corresponding response message to the equipment comprises:
analyzing, by the channel unit, the received message, extracting basic information of the received message, and storing the basic information of the received message; and
generating, by the channel unit, the response message corresponding to the received message, framing the response message according to the stored basic information, and sending the framed response message to the equipment.

3. The method as claimed in claim 1 or 2, further comprising: actively generating and sending, by the channel unit, a message to the equipment born by the equipment network interface.

4. The method as claimed in claim 3, further comprising: receiving basic information of each piece of equipment born by the equipment network interface from the CPU, wherein
actively sending, by the channel unit, the message to the equipment born by the equipment network interface comprises:
actively generating, by the channel unit, a message to be sent, extracting basic information of the equipment, framing the message to be sent according to the basic information of the equipment, and sending the framed message to be sent to the equipment born by the equipment network interface.

5. The method as claimed in claim 4, further comprising:
dividing one elementary time unit into a plurality of slot segments according to a maximum packet sending frequency of messages;
dividing a slot segment into a plurality of subinterval segments according to a message type currently to be generated, one subinterval segment corresponding to one message type; and
dividing a subinterval segment into a plurality of sub-slot segments according to a maximum number of equipment born by the equipment network interface, one sub-slot segment corresponding to one piece of equipment born by the equipment network interface, wherein
actively sending, by the channel unit, the message to the equipment born by the equipment network interface comprises:
when a sub-slot segment in the subinterval segment arrives, generating, by the channel unit, a message to be sent of a type corresponding to the subinterval segment, extracting basic information of target equipment corresponding to the sub-slot segment, framing the message to be sent according to the basic information, and sending the framed message to the target equipment.

6. The method as claimed in claim 2, further comprising:
dividing one elementary time unit into a plurality of slot segments according to a maximum packet sending frequency of messages; and
dividing a slot segment into a plurality of subinterval segments according to a message type currently to be generated, one subinterval segment corresponding to one message type, wherein
generating, by the channel unit, the response message corresponding to the received message, framing the response message according to the stored basic information and sending the framed response message to the equipment comprises:
when a subinterval segment arrives, generating a response message of a type corresponding to the subinterval segment, framing the response message according to the stored basic information, and sending the framed response message to the equipment.

7. A channel unit, comprising: a received message processing component, a Sent message processing component and a message generating component, wherein
the received message processing component is configured to receive a message sent by equipment born by an equipment network interface, judge whether the received message is a message required to be processed by a Central Processing Unit, CPU, or not, and when a judgment result is that the received message is the message required to be processed by the CPU, send the message to the CPU;
the message generating component is configured to, when a judgment result of the received message processing component is that the received message is not the message required to be processed by the CPU, generate a corresponding response message; and
the Sent message processing component is configured to receive a response message returned by the CPU, directly forward the response message to the equipment, and send the response message in the message generating component to the equipment.

8. The channel unit as claimed in claim 7, wherein the message generating component comprises a sent message framing component and a received message caching component;
the received message processing component is further configured to analyze the received message, and extract basic information of the received message;
the received message caching component is configured to store the extracted basic information of the received message;
the sent message framing component is configured to generate the response message corresponding to the received message, and frame the response message according to the basic information stored in the received message caching component; and
the Sent message processing component is configured to send the response message framed in the sent message framing component to the equipment.

9. The channel unit as claimed in claim 7 or 8, wherein the message generating component is further configured to actively generate a message; and the Sent message processing component is further configured to send the message actively generated by the message generating component to the equipment born by the equipment network interface.

10. The channel unit as claimed in claim 9, wherein the message generating component further comprises: a basic information acquiring component;
the basic information acquiring component is configured to receive basic information of each piece of equipment born by the equipment network interface from the CPU;
the sent message framing component is configured to actively generate a message to be sent, extract basic information of target equipment from the basic information acquiring component, and frame the message to be sent according to the basic information of the equipment; and
the Sent message processing component is configured to send the framed message to be sent to the equipment born by the equipment network interface.

11. The channel unit as claimed in claim 10, wherein the message generating component further comprises: a slot dividing component; the slot dividing component is configured to:
divide one elementary time unit into a plurality of slot segments according to a maximum packet sending frequency of messages,
divide a slot segment into a plurality of subinterval segments according to a message type currently to be generated, one subinterval segment corresponding to one message type, and
divide a subinterval segment into a plurality of sub-slot segments according to a maximum number of equipment born by the equipment network interface, one sub-slot segment corresponding to one piece of equipment born by the equipment network interface; and
the sent message framing component is configured to, when a sub-slot segment in the subinterval segment arrives, generate a message to be sent of a type corresponding to the subinterval segment, extract basic information of target equipment corresponding to the sub-slot segment, and frame the message to be sent according to the basic information.

12. The channel unit as claimed in claim 8, wherein the message generating component further comprises: a slot dividing component; the slot dividing component is configured to:
divide one elementary time unit into a plurality of slot segments according to a maximum packet sending frequency of messages, and
divide a slot segment into a plurality of subinterval segments according to a message type currently to be generated, one subinterval segment corresponding to one message type; and
the sent message framing component is configured to, when a subinterval segment arrives, generate a response message of a type corresponding to the subinterval segment, frame the response message according to the stored basic information, and send the framed response message to the equipment.

13. A device for receiving and sending a message, comprising at least two channel units as claimed in any one of claims 7-12, wherein one channel unit corresponds to one equipment network interface, and each channel unit concurrently receives message transmitted by each equipment network interface;
the device for receiving and sending the message further comprises a converging component; and the converging component is configured to converge and send messages sent to a Central Processing Unit, CPU, by each channel unit to the CPU, and send a response message returned by the CPU to the corresponding channel unit.

14. Communication equipment, comprising a Central Processing Unit, CPU, at least two equipment network interfaces and the device for receiving and sending the message as claimed in claim 13.
